# EUROPEAN PATENT SPECIFICATION

(11) **EP 3 252 640 B1**
(45) Date of publication and mention of the grant of the patent: **01.05.2019**
(21) Application number: 17171033.8
(22) Date of filing: 15.05.2017
(51) Int. Cl.: G06F 21/32, G06K 9/00, H04L 29/06, G06F 3/0488, H04M 1/725, H04L 29/08, G06K 9/70, G06F 9/445, H04M 1/67, G06F 3/0354

(54) **METHOD FOR LAUNCHING APPLICATION AND TERMINAL**
VERFAHREN ZUM STARTEN EINER ANWENDUNG UND ENDGERÄT
PROCÉDÉ DE LANCEMENT D'UNE APPLICATION ET TERMINAL

(30) Priority: 31.05.2016 CN 201610382832
(43) Date of publication of application: 06.12.2017
(73) Proprietor: Guangdong Oppo Mobile Telecommunications Corp., Ltd, Dongguan, Guangdong 523860 (CN)
(72) Inventor: ZHANG, Haiping, Chang'an Dongguan, Guangdong (CN); ZHOU, Yibao, Chang'an Dongguan, Guangdong (CN)
(74) Representative: Mewburn Ellis LLP

(56) References cited:
- EP-A1- 3 239 828
- JP-A- H0 561 964
- KR-A- 20150 145 677
- US-A1- 2005 188 226
- US-A1- 2014 184 549
- US-A1- 2014 359 456
- US-A1- 2014 363 074
- RAHUL JAIN ET AL: "Contextual adaptive user interface for Android devices", 2013 ANNUAL IEEE INDIA CONFERENCE (INDICON), 1 December 2013 (2013-12-01), pages 1-5, XP055116257, DOI: 10.1109/INDCON.2013.6726014 ISBN: 978-1-47-992274-1
- YANG LI: "Gesture search", UIST '10 : PROCEEDINGS OF THE TWENTY-THIRD ANNUAL ACM SYMPOSIUM ON USER INTERFACE SOFTWARE AND TECHNOLOGY, ACM, US, 3 October 2010 (2010-10-03), pages 87-96, XP058091322, DOI: 10.1145/1866029.1866044 ISBN: 978-1-4503-0271-5

## Description

### TECHNICAL FIELD

The present disclosure relates to the field of electronic technology, and in particular, to a method for launching an application and a terminal.

### BACKGROUND

The fingerprint recognition technology is now a standard configuration of a flagship model of mainstream terminal (such as smart phone and tablet computer) vendors. Under the condition of that a terminal is screen-locked, when a user wants to directly operate an application after the terminal is unlocked, the user puts his or her finger on a fingerprint recognition sensor of the terminal to unlock the terminal. The terminal then acquires a fingerprint image and a sliding trace. After acquiring the fingerprint image and the sliding trace, the terminal matches the fingerprint image with a template pre-stored in the terminal. When the fingerprint image matches with the template, the terminal determines an application corresponding to the sliding trace, and then launches the application.

The time for launching an application is a period from receiving the fingerprint image to launching the application. The length of the time for launching an application affects efficiency of launching an application by the terminal, thus how to shorten the time for launching an application is an urgent technical problem to be resolved.

US 2014/184549 A1 discloses a technique of using biometric identification to control execution of matching software functions.

PAHUL JAIN ET AL: "Contextual adaptive user interface for Android devices") discloses a framework to adapt the user interface of mobile computing devices like smartphones or tablets, based on the context or scenario in which user is present.

US 2014/359456 A1 discloses a mobile apparatus configured to determine whether it is disposed in a vehicle and, based on a determining that it is in the vehicle, automatically present a first user interface (UI) that is simplified and/or easier to manipulate while driving relative to a second UI that would otherwise be presented.

KR 20150145677 discloses a method for providing a user interface that comprises: (a) recognizing a gesture and bio-information individually obtained from a gesture input means and a bio-information input means; (b) specifying an object and a command corresponding to the recognized gesture or the recognized bio-information by referring to a corresponding relationship between a preset gesture or bio-information and a preset object or a command, and specifying a user by referring to the recognized bio-information; and (c) determining that the specified command is to be carried out with respect to the specified object within the scope of a right granted to the specified user.

US 2005/188226 A1 discloses setting an authentication priority for a plurality of users based on login information of each of the users when fingerprint information is input by users to login from the fingerprint sensor. Authentication of the users is carried out by comparing the fingerprint information input and fingerprint information of each finger of the users that are registered in a fingerprint information table in order based on the authentication priority from a user that has a highest ranking.

JP H 05-61964 A discloses a fingerprint matching device in which matching time can be shortened for a fingerprint inputted frequently, and a registration fingerprint data area change means performs the change of registration on a new area in registration areas in the memory for fingerprint registration in sequence of the fingerprint registration data with highest priority.

EP 3 239 828 A1 discloses a method that includes detecting an input hand gesture on a mobile terminal screen, and acquiring a trajectory of the input hand gesture. The method may also include matching the acquired trajectory of the input hand gesture with the hand gestures in correspondence in accordance with the hand-gesture comparison rules.

YANG LI: "Gesture search" discloses a gesture search tool, which allows a user to quickly access various data items on a mobile phone by drawing gestures on its touch screen.

US 2014/363074 A1 discloses a handwriting recognition module trained to have a repertoire comprising multiple non-overlapping scripts and capable of recognizing tens of thousands of characters using a single handwriting recognition model, a handwriting input module provides real-time, stroke-order and stroke-direction independent handwriting recognition.

### SUMMARY

Embodiments of the present disclosure provide a method for launching an application and a terminal. By means of the method and the terminal, the time of launching an application may be shortened. The invention is defined by the appended claims. All embodiments of the invention fall under the scope of the claims. Implementation manners and other disclosure not falling within the claims is to be considered exemplary.

In a first aspect, there is provided a method for launching an application as set out in claim 1. The method may include: acquiring a sliding trace of a sliding operation performed on a fingerprint recognition sensor of a terminal; acquiring a fingerprint image and matching the fingerprint image during the acquisition of the sliding trace; determining a target application corresponding to the sliding trace; and launching the target application when the fingerprint image is successfully matched.

In some implementation manners, launching the target application may include: determining a first target application interface of the target application according to current system time of the terminal, a geographic location of the terminal, and the fingerprint image; and loading and displaying the first target application interface to launch the target application.

In some implementation manners, launching the target application may include: determining a second target application interface of the target application, wherein the number of times of loading and displaying the second target application interface in a first period is greater than or equal to a first threshold; and loading and displaying the second target application interface to launch the target application.

In some implementation manners, matching the fingerprint image may include: matching the fingerprint image with N pre-stored fingerprint templates of the terminal in a descending order of priorities of the N pre-stored fingerprint templates, wherein N is an integer greater than 1; and determining that the fingerprint image is successfully matched when a matching degree between the fingerprint image and one of the N pre-stored fingerprint templates is greater than or equal to a second threshold.

In the first aspect as claimed, determining the target application includes: matching the sliding trace with M pre-stored sliding traces of the terminal in a descending order of the number of times of launching applications corresponding to the M pre-stored sliding traces in a second period; determining one of the M pre-stored sliding traces that matches with the sliding trace; and determining the application corresponding to the one of the M pre-stored sliding traces to be the target application.

In some implementation manners, the method may further include loading a system desktop when the fingerprint image is successfully matched and no application corresponding to the sliding trace exists.

In a second aspect, there is provided a terminal as set out in claim 7. The terminal may include various functional units to perform any of the above methods.

In a third aspect, there is provided a terminal as set out in claim 11. The terminal may include a memory configured to store computer-executable program codes; and a processor configured to execute the computer-executable program codes to perform: acquiring a sliding trace of a sliding operation performed on a fingerprint recognition sensor of a terminal; acquiring a fingerprint image and matching the fingerprint image during the acquisition of the sliding trace; determining a target application corresponding to the sliding trace; determining a target application interface of the target application; and loading and displaying the target application interface to launch the target application when the fingerprint image is successfully matched.

In some implementation manners, the processor that is configured to invoke the computer-executable program codes to perform determining the target application interface is further configured to perform: determining the target application interface according to current system time of the terminal, a geographic location of the terminal, and the fingerprint image.

In some implementation manners, the processor that is configured to invoke the computer-executable program codes to perform determining the target application interface is further configured to perform: determining an application interface of the target application to be the target application interface, wherein the number of times of loading and displaying the application interface in a first period is greater than or equal to a first threshold.

In some implementation manners, the processor that is configured to invoke the computer-executable program codes to perform determining the target application interface is further configured to perform: selecting one of H application interfaces of the target application to be the target application interface, wherein H is an integer greater than 1, the number of times of loading and displaying each of the H application interfaces in the first period is greater than or equal to the first threshold, the number of times of loading and displaying the one of the H application interfaces in a preset period is maximum, the first threshold comprises the preset period.

In some implementation manners, the processor that is configured to invoke the computer-executable program codes to perform matching the fingerprint image is further configured to perform: matching the fingerprint image with N pre-stored fingerprint templates of the terminal in a descending order of priorities of the N pre-stored fingerprint templates, wherein N is an integer greater than 1; and determining that the fingerprint image is successfully matched when a matching degree between the fingerprint image and one of the N pre-stored fingerprint templates is greater than or equal to a second threshold.

In the third aspect as claimed, the processor that is configured to invoke the computer-executable program codes to perform determining the target application is further configured to perform: matching the sliding trace with M pre-stored sliding traces of the terminal in a descending order of the number of times of launching applications corresponding to the M pre-stored sliding traces in a second period; determining one of the M pre-stored sliding traces that matches with the sliding trace; and determining the application corresponding to the one of the M pre-stored sliding traces to be the target application.

In some implementation manners, the processor is further configured to invoke the computer-executable program codes to perform: adjusting the screen brightness and a display background of the terminal according to the target application interface, the current environment brightness, and the fingerprint image.

In some implementation manners, the processor is further configured to invoke the computer-executable program codes to perform: loading a system desktop when the fingerprint image is successfully matched and no application corresponding to the sliding trace exists.

In the embodiment, during the acquisition of the sliding trace, the fingerprint image is acquired and matched. When the fingerprint image is matched, an application corresponding to the sliding trace is launched. As the fingerprint image is acquired and matched during the acquisition of the sliding trace, the time of launching an application is shortened, and the efficiency of launching an application is accordingly improved.

### BRIEF DESCRIPTION OF DRAWINGS

To better illustrate the technical solution of embodiments of the present disclosure or the technical solution of the present technology, the following descriptions will briefly illustrate the accompanying drawings described in the embodiments or the present technology. Obviously, the following described accompanying drawings are some embodiments of the present disclosure. Those skilled in the art can acquire other accompanying drawings according to the described accompanying drawings without creative efforts.
FIG. 1 is a flow chart of a method for launching an application according to an embodiment of the present disclosure.
FIG. 2 is a sub flow chart of one of operations in FIG. 1 according to an embodiment of the present disclosure.
FIG. 3 is a sub flow chart of one of operations in FIG. 1 according to another embodiment of the present disclosure.
FIG. 4 is a flow chart of a method for launching an application according to another embodiment of the present disclosure.
FIG. 5 is a structure diagram of a terminal according to an embodiment of the present disclosure.
FIG. 6 is a structure diagram of a terminal according to another embodiment of the present disclosure.
FIG. 7 is a structure diagram of a terminal according to yet another embodiment of the present disclosure.
FIG. 8 is a schematic diagram illustrating an example of a fingerprint template.

### DESCRIPTION OF EMBODIMENTS

In order to make a better understanding of technical solutions of the present disclosure by those skilled in the art, the technical solutions of embodiments of the present disclosure will be described clearly and completely in combination with the accompanying drawings of the embodiments of the present disclosure. Obviously, the described embodiments are merely a part of embodiments of the present disclosure, and not all of the embodiments. All other embodiments acquired by those skilled in the art without creative efforts based on the embodiments of the present disclosure shall fall within the protection scope of the present disclosure.

The following will specifically illustrate various embodiments respectively.

Terms "first", "second", "third", "fourth", and so on used in the specification, appended claims, and accompanying drawings of the present disclosure are used to distinguish different objects rather than describe specific sequences. Additionally, terms "include", "have", and any deformation thereof are intended to cover non-exclusive inclusion relationship. For example, a process, method, system, product, or device including a series of operations or units is not limited to listed operations or units, and In at least one alternative embodiment, can include operations or units which are not listed, or in at least one alternative embodiment, can further include other inherent operations or units for the process, method, product, or device.

The "embodiments" mentioned herein means that particular features, structures or features described with reference to the embodiments may be included in at least one embodiment of the disclosure. Phrases appearing at various positions of the specification neither always refer to the same embodiment, nor separate or alternative embodiments that are mutually exclusive with other embodiments. It is explicitly and implicitly understood by those skilled in the art that the embodiments described herein may be combined with other embodiments.

In the following, some of the terms used herein are explained to facilitate the understanding of those skilled in the art.
1) Terminal, also known as terminal device, terminal equipment or user equipment (UE), means an electronic device that provides voice and/or data connectivity to a user, examples of which can be hand-held devices with wireless connectivity function, on-board devices or the like. Common terminals can be, for example, mobile phones, tablets, laptops, handheld computers, mobile internet devices (MID), or wearable equipment such as smart watches, smart bracelets, and pedometers or others. Terminals in the present disclosure are not only limited to the common terminals, but can also be automated teller machines (ATM), ticket machines, entrance guard machines, medical equipment, or other terminals equipped with fingerprint recognition function.
2) A fingerprint recognition sensor can realize the identification of individual fingerprint features through a specific induction unit. At present, the fingerprint recognition sensor is mainly divided into an optical fingerprint unit, a capacitive fingerprint unit, and a radio frequency (RF) fingerprint unit. The fingerprint recognition sensor can be set in combination with a metal dome array (in other words, dome key) of a terminal, and can be set on the front surface, the rear surface, or the side surface of the terminal, the present disclosure is not limited thereto. Similarly, the fingerprint recognition sensor can be set in combination with the touch screen of the terminal. For example, the fingerprint recognition sensor can be set below the touch panel of the touch screen.
3) The term "feature" refers to fingerprint features of a fingerprint image. The fingerprint feature data includes general features and local features, and the general features include basic print patterns such as loop, arch, and whorl, while the local features refer to minutiae points on the fingerprint. Two fingerprints often have the same general features, however, their local features, that is, minutiae points, cannot be exactly the same. Prints of a fingerprint are not continuous, smooth, or straight, but often break, bifurcated, or curved. These break points, bifurcation points, and turning points are called "minutiae points", which can provide confirmation information of the uniqueness of a fingerprint. Minutiae points on a fingerprint have the following four different properties: 1) Ending, means an end of a print; 2) Bifurcation, means the splitting of a print into two or more than two prints; 3) Ridge Divergence, means the separating of two parallel prints; 4) Dot or Island, means a particularly short print that become a little dot; 5) Enclosure, means a small ring formed when a print separated into two prints and these two prints immediately merged into one. Fingerprint feature data still includes the follows: 1) Short Ridge, means a print which is short but not so short to be a little dot; 2) Orientation, means that a minutiae point can toward a certain direction; 3) Curvature, describes the speed at which the orientation of a print changes; 4) Position, which is described via (x, y) coordinates, can be absolute, or can be inductively recognized relative to triangular points or feature points.
3) The terms "a number of' or "multiple" means two or more than two. The term "and/or" is used to describe the association of associated objects and indicates that there can be three relationships. For example, "A and/or B" means three situations, that is, A alone, both A and B, or B alone. The character "/" generally indicates that the associated objects before and after the character are in an "OR" relationship.

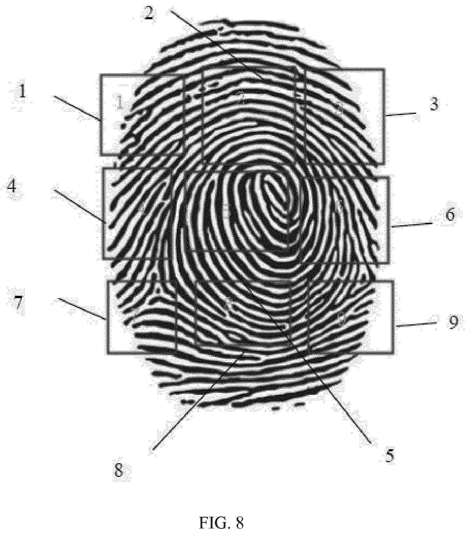

In the present disclosure, the term "fingerprint template" means that, when a fingerprint function of a terminal such as a mobile phone is enabled for the first time, the user may be asked to undergo a fingerprint registration process. During the fingerprint registration, the user puts his or her finger on a fingerprint sensor for fingerprint image reception, and fingerprint feature information of the received fingerprint images will be extracted to form a fingerprint template, usually, one finger corresponds to one fingerprint template. Generally, the fingerprint sensor may receive 10-20 times for each finger in order to receive the whole fingerprint face and generate a comprehensive fingerprint template. FIG. 8 illustrates an exemplary fingerprint template, and each number marked in the fingerprint of FIG. 8 refers to fingerprint feature information.

In the present disclosure, when we refer to "receive" or "receiving" fingerprint image or fingerprint data, it means that a terminal or a fingerprint recognition sensor of the terminal or other related components of the terminal can acquire, collect, acquire or in other manners to get the fingerprint image or fingerprint data. The present disclosure is not limited thereto.

The present disclosure relates to a method for launching an application. The method may include the follows. A sliding trace of a sliding operation performed on a fingerprint recognition sensor of a terminal is acquired. A fingerprint image is acquired and matched during the acquisition of the sliding trace. A target application corresponding to the sliding trace is determined. When the fingerprint image is successfully matched, the target application is launched.

The present disclosure further relates to a terminal to execute the above method for launching an application.

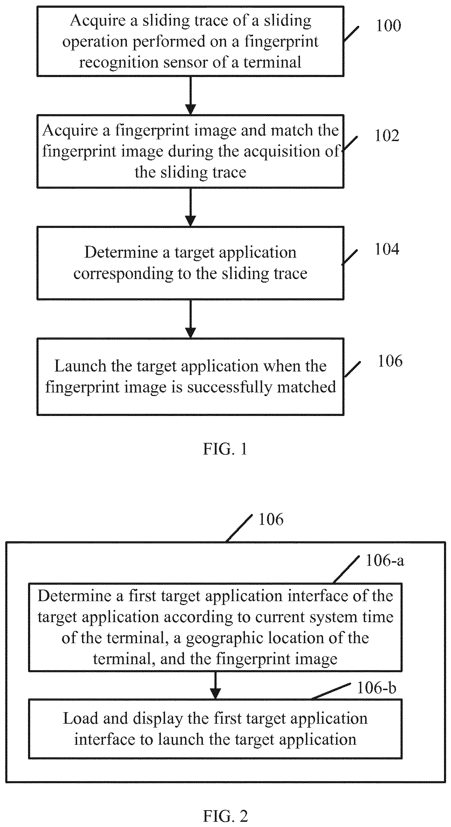

FIG. 1 is a flow chart of a method for launching an application according to an embodiment of the present disclosure. The method may include the follows.

At block 100, a terminal acquires a sliding trace of a sliding operation performed on a fingerprint recognition sensor of the terminal.

At block 102, the terminal acquires a fingerprint image and matches the fingerprint image during the acquisition of the sliding trace.

At block 104, the terminal determines a target application corresponding to the sliding trace.

At block 106, the terminal launches the target application when the fingerprint image is successfully matched.

In the embodiment, during the acquisition of the sliding trace, the fingerprint image is acquired and matched. When the fingerprint image is matched, an application corresponding to the sliding trace is launched. As the fingerprint image is acquired and matched during the acquisition of the sliding trace, the time of launching an application is shortened, and the efficiency of launching an application is accordingly improved.

In at least one alternative embodiment, as illustrated in FIG. 2, an implementation manner in which the terminal launches the target application may include the follows.

At block 106-a, the terminal determines a first target application interface of the target application according to current system time of the terminal, a geographic location of the terminal, and the fingerprint image.

At block 106-b, the terminal loads and displays the first target application interface to launch the target application.

For example, to enable the user to directly operate a desired application interface after a screen of the terminal is unlocked, the terminal may determine the first target application interface according to a mapping relationship between the system time, the geographic location, the fingerprint image, and the application interface. For example, when the fingerprint image is D, the current system time is 18:00, and the current geographic location is a dining room C, the first target application interface may be a payment interface of an evening coupon of the dining room C. When the fingerprint image is E, the current system time is 18:00, and the current geographic location is the dining room C, the first target application interface may be evening discount information of the dining room C. A priority of the fingerprint image D is higher than that of other fingerprint images stored in the terminal. That is, application interfaces vulnerable to information leakage such as payment-related interfaces can be directly loaded and displayed only when the priority of the fingerprint image is highest.

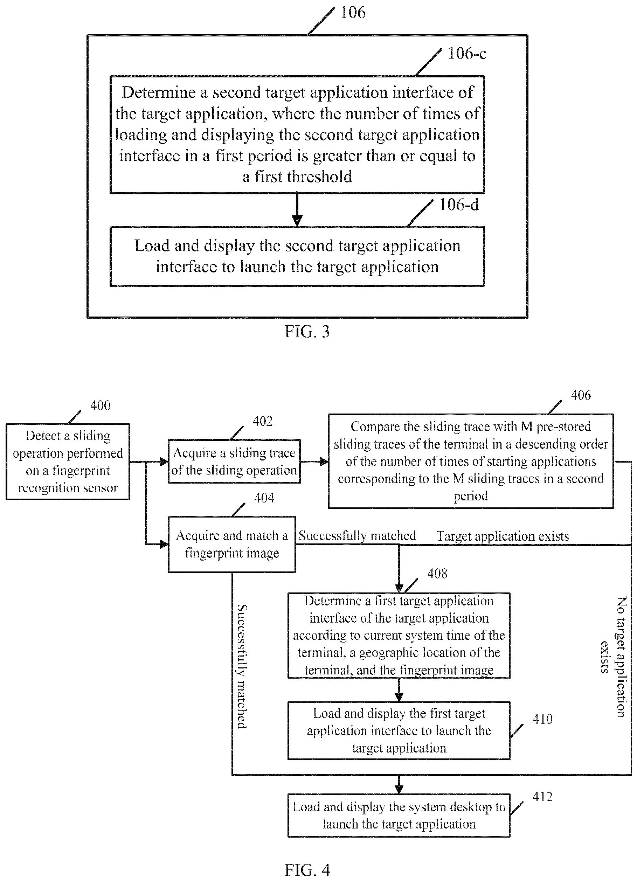

In at least one alternative embodiment, as illustrated in FIG. 3, an implementation manner in which the terminal launches the target application may include the follows.

At block 106-c, the terminal determines a second target application interface of the target application, where the number of times of loading and displaying the second target application interface in a first period is greater than or equal to a first threshold.

At block 106-d, the terminal loads and displays the second target application interface to launch the target application.

For example, to enable the user to directly operate a desired application interface after a screen of the terminal is unlocked, the terminal may determine the second target application interface of the target application, where the number of times of loading and displaying the second target application interface in the first period (for example, a period from 30 minutes before the current system time to 30 minutes after the current system time, or a period from 60 minutes before the current system time to 60 minutes after the current system time) is greater than or equal to the first threshold. The first threshold may be eight, ten, thirteen, fifteen, or other values. It is assumed that the target application is XX, the current system time is 18:00, and the application interface of the XX loaded for ten or more times in a period from 30 minutes before 18:00 to 30 minutes after 18:00 is only a food interface, the terminal directly loads and displays the food screen to launch the XX.

In the foregoing example, there is only one second target application interface. When there are H (H is an integer greater than 1) second target application interfaces, the terminal selects, among the H second target application interfaces, an application interface the number of times of loading which in a preset period is maximum, and loads and displays the selected application interface. The first period includes the preset period. For example, the first period is from 60 minutes before the current system time to 60 minutes after the current system time, in the first period, the number of the second target application interfaces is five. The preset period is from 20 minutes before the current system time to 20 minutes after the current system time, in the preset period, the number of the second target application interfaces is two, and the second application interface is the second target application interface A and the second target application interface B. The number of times of loading the second target application interface A is greater than that of loading the second target application interface B, thus the terminal directly loads and displays the second target application interface A to launch the target application.

In at least one alternative embodiment, an implementation manner in which the terminal matches the fingerprint image may include the follows.

The terminal compares the fingerprint image with N pre-stored fingerprint templates of the terminal in a descending order of priorities of the N pre-stored fingerprint templates. When a matching degree between the fingerprint image and one of the N pre-stored fingerprint templates is greater than or equal to a second threshold, it is determined that the fingerprint image is successfully matched. When a matching degree between the fingerprint image and one of the N pre-stored fingerprint templates is less than the second threshold, it is determined that the fingerprint image does not match with the one of the N pre-stored fingerprint templates, and the fingerprint image may be matched with next pre-stored fingerprint template.

Generally, the terminal supports multiple pre-stored fingerprint templates. That is, the user may register two or more than two fingerprint templates, but generally not more than eight fingerprint templates. Each pre-stored fingerprint template has about 20 fingerprint images. Therefore, when more fingerprint templates are registered, the time of matching an acquired fingerprint image is longer. Generally, when only one fingerprint template is registered, only twenty fingerprint images are matched in fingerprint unlocking, the speed is quick, and the unlocking time is as short as about 60-80ms. However, when five fingerprint templates are registered, the five fingerprint templates are matched, and the unlocking time is prolonged.

An implementation manner in which the descending order of the priorities of the N pre-stored fingerprint templates is determined may include the follows. The terminal acquires the number of times of matching the N pre-stored fingerprint templates in a preset time range (such as one month), and then the terminal determines the descending order of the priorities of the N pre-stored fingerprint templates according to the number of times of matching the N pre-stored fingerprint templates in the preset time range. For example, the pre-stored fingerprint templates include a fingerprint template 1, a fingerprint template 2, and a fingerprint template 3. When the number of times of matching the fingerprint template 1 in one month is one hundred, the number of times of matching the fingerprint template 2 in one month is ten, and the number of times of matching the fingerprint template 3 in one month is five, the descending order is from the fingerprint template 1 to the fingerprint template 2 and further to the fingerprint template 3. Finally, the terminal matches the acquired fingerprint image with the N pre-stored fingerprint templates in the descending order of the priorities of the N pre-stored fingerprint images. For example, the acquired fingerprint image is firstly matched with the fingerprint template 1. When a matching degree between the acquired fingerprint image and the fingerprint template 1 is greater than or equal to the second threshold, it indicates that the acquired fingerprint image is successfully matched, and matching the acquired fingerprint image stops. When the matching degree is less than the second threshold, it indicates that the acquired fingerprint image does not match with the fingerprint template 1, and the terminal matches the target fingerprint image with the fingerprint template 2, and so on.

Another implementation manner in which the descending order of the priorities of the N pre-stored are determined may include the follows. The terminal acquires priorities that are set at the time of registering the N pre-stored fingerprint templates, and then the terminal determines the descending order of the priorities of the N pre-stored fingerprint templates according to a descending order of the priorities that are set at the time of registering the N pre-stored fingerprint templates. For example, the pre-stored fingerprint templates include a fingerprint template 1, a fingerprint template 2, and a fingerprint template 3. The priority of the fingerprint template 1 is priority 1, the priority of the fingerprint template 2 is priority 2, the priority of the fingerprint template 3 is priority 3, the priority 1 is greater than the priority 2, and the priority 2 is greater than priority 3, so that the descending order is from the fingerprint template 1 to the fingerprint template 2 and further to the fingerprint template 3. Finally, the terminal matches the acquired fingerprint image with the N pre-stored fingerprint templates in the descending order of the priorities of the N pre-stored fingerprint templates. For example, the acquired fingerprint image is firstly matched with the fingerprint template 1. When a matching degree between the acquired fingerprint image and the fingerprint template 1 is greater than or equal to the second threshold, it indicates that the acquired fingerprint image is successfully matched, and matching the acquired fingerprint image stops. When the matching degree is less than the second threshold, it indicates that the acquired fingerprint image does not match with the fingerprint template 1, and the terminal matches the target fingerprint image with the fingerprint template 2, and so on.

In at least one alternative embodiment, an implementation manner in which the terminal determines the target application may include the follows.

The terminal matches the sliding trace with M pre-stored sliding traces in a descending order of the number of times of launching applications corresponding to the M pre-stored sliding traces in a second period. When the sliding trace matches with one of the M pre-stored sliding traces, it indicates that a target application corresponding to the sliding trace exists. When the sliding trace does not match with any of the M pre-stored sliding traces, it indicates that no target application corresponding to the sliding trace exists.

Generally, the terminal supports multiple bound sliding traces. That is, two or more sliding traces can be pre-stored in the terminal. When M sliding traces are pre-stored, the terminal may match the sliding trace with the M pre-stored sliding traces in the descending order of the number of times of launching the applications corresponding to the M pre-stored sliding traces in the second period. The second period may be 1 month, within 15 days, within 10 days, or other values. For example, when the pre-stored sliding traces include a sliding trace 1, a sliding trace 2, and a sliding trace 3, the second period is one month, the number of times of launching the application corresponding to sliding trace 1 is greater than that of launching the application corresponding to the sliding trace 2, and the number of times of launching the application corresponding to sliding trace 2 is greater than that of launching the application corresponding to the sliding trace 3, thus the descending order of the number of times of launching the applications corresponding to the M pre-stored sliding traces in the second period is from the sliding trace 1 to the sliding trace 2 and further to the sliding trace 3. The terminal then matches the sliding trace with the M pre-stored sliding traces in the descending order of the number of times of launching the applications corresponding to the M pre-stored sliding traces in the second period. For example, the terminal matches the sliding trace with the sliding trace 1 first. When the sliding trace matches with the sliding trace 1, it indicates that the matching succeeds, and the matching stops, otherwise, the terminal matches the sliding trace with the sliding trace 2, and so on.

In at least one alternative embodiment, the method may further include the follows. When it is determined that the fingerprint image is successfully matched and no application corresponding to the sliding trace exists, the terminal loads and displays the system desktop.

In at least one alternative embodiment, the method may further include the follows. The terminal adjusts the screen brightness and a display background of the terminal according to the displayed application interface, the current environment brightness, and the fingerprint image.

For example, when different users use the same application, the habitual screen brightness and display backgrounds are different, or, when the same user uses an application in different environments, the habitual screen brightness and the display backgrounds are different. To improve effects of user experience, the terminal may adjust the screen brightness and display background of the terminal according to the displayed application interface, the current environment brightness, and the fingerprint image. The terminal searches for all mapping relationships between the environment luminance, the screen brightness, and display backgrounds of the application interface, and then from the mapping relationships, selects the mapping relationship corresponding to the fingerprint image, and finally, according to the current environment brightness, selects the final desired screen brightness and display background of the terminal from the mapping relationship corresponding to the fingerprint image.

In at least one alternative embodiment, an implementation manner in which the terminal acquires the fingerprint image may include the follows.

The terminal acquires M1 normal underlying data corresponding to M1 normal sensing electrodes of the fingerprint recognition sensor, and acquires M2 abnormal underlying data corresponding to M2 abnormal sensing electrodes of the fingerprint recognition sensor. A sensing electrode array of the fingerprint recognition sensor includes the M1 normal sensing electrodes and the M2 abnormal sensing electrodes, and M1 and M2 are positive integers. The terminal determines M2 normal underlying data corresponding to the M2 abnormal sensing electrodes according to the M1 normal sensing electrodes. The terminal further forms the fingerprint image according to the M1 normal underlying data and the M2 normal underlying data.

In at least one alternative embodiment, an implementation manner in which the terminal determines the M2 normal underlying data corresponding to the M2 abnormal sensing electrodes according to the M1 normal underlying data may include the follows.

The terminal determines an average value of the M1 normal underlying data, and replaces each of the M2 abnormal underlying data with the average value, so as to acquire the M2 normal underlying data corresponding to the M2 abnormal sensing electrodes.

In at least one alternative embodiment, an implementation manner in which the terminal determines the M2 normal underlying data corresponding to the M2 abnormal sensing electrodes according to the M1 normal underlying data may include the follows.

The terminal acquires a coordinate value of each of the M2 abnormal sensing electrodes, and performs a mean processing on each abnormal sensing electrode according to the coordinate value of each abnormal sensing electrode and the M1 underlying data, so as to acquire the M2 normal underlying data corresponding to the M2 abnormal sensing electrodes.

The mean processing includes the follows. x sensing electrodes of the M1 normal sensing electrodes are determined, and a distance between each of the x sensing electrodes and the coordinate value of each of the abnormal sensing electrodes subjected to the mean processing is smaller than a preset distance. The average value of x underlying data corresponding to the x sensing electrodes is calculated, and the average value is determined to be the reference underlying data of each abnormal sensing electrode subjected to the mean processing, where x is a positive integer.

The above underlying data may include capacitive values and/or voltage values, and so on. The above abnormal sensing electrodes are abnormal sensing electrodes within a fingerprint collection region. The sensing electrodes of the fingerprint recognition sensor may be controlled by a micro controller unit (MCU) of the fingerprint recognition sensor.

It shall be noted that with increase of the use time of the fingerprint recognition sensor, some sensing electrodes of the fingerprint recognition sensor may become abnormal, and underlying data acquired by the abnormal sensing electrodes is abnormal. Thus, the fingerprint image formed by the underlying data acquired by the normal sensing electrodes and the abnormal sensing electrodes may generate noise, and subsequent fingerprint matching may be affected. Therefore, before the fingerprint image is formed, the abnormal underlying data may be corrected first to reduce noise of the fingerprint image, the fingerprint matching is accordingly improved.

As illustrated in FIG. 4, an embodiment of the present disclosure further provides another more detailed method for launching an application. The method may include the follows.

At block 400, a terminal detects a sliding operation performed on a fingerprint recognition sensor of a terminal.

At block 402, the terminal acquires a sliding trace of the sliding operation.

At block 404, during the acquisition of the sliding trace, the terminal acquires a fingerprint image and matches the fingerprint image.

At block 406, the terminal compares the sliding trace with M pre-stored sliding traces of the terminal in a descending order of the number of times of launching applications corresponding to the M sliding traces in a second period, where M is an integer greater than 1.

When the sliding trace matches with one of the M pre-stored sliding traces, it indicates that a target application corresponding to the sliding trace exists.

When the sliding trace does not match with any one of the M pre-stored sliding traces, it indicates that no target application corresponding to the sliding trace exists.

At block 408, when it is determined that the fingerprint image is successfully matched and the target application corresponding to the sliding trace exists, the terminal determines a first target application interface of the target application according to current system time of the terminal, a geographic location of the terminal, and the fingerprint image.

At block 410, the terminal loads and displays the first target application interface to launch the target application.

At block 412, when it is determined that the fingerprint image is successfully matched and no application corresponding to the sliding trace exists, the terminal loads and displays the system desktop to launch the target application.

It should be noted that, the operation at block 402 is performed before the operation at block 404, and the operation at block 404 is performed simultaneously with the operation at block 402. In addition, the implementation manners of the operations illustrated in FIG. 4 are not described herein any further, and reference may be made to the implementation manners of the above methods.

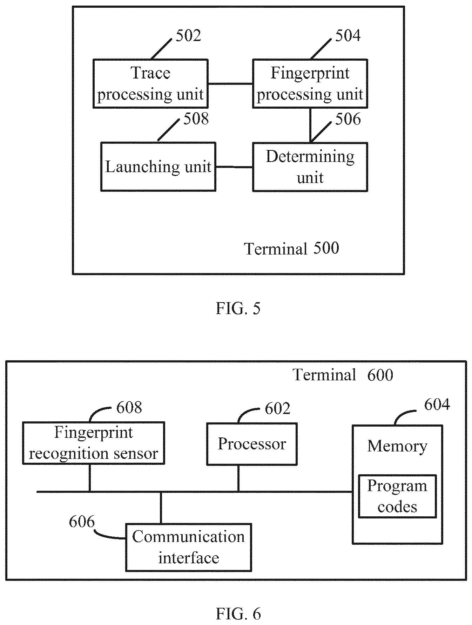

The present disclosure further provides a terminal 500. As illustrated in FIG. 5, the terminal 500 includes a trace processing unit 502, a fingerprint processing unit 504, a determining unit 506, and a launching unit 508.

The trace processing unit 502 is configured to acquire a sliding trace of a sliding operation performed on a fingerprint recognition sensor of the terminal 500.

The fingerprint processing unit 504 is configured to acquire a fingerprint image and match the fingerprint image during the acquisition of the sliding trace.

The determining unit 506 is configured to determine a target application corresponding to the sliding trace.

The launching unit 508 is configured to launch the target application when the fingerprint image is successfully matched.

In the embodiment, during the acquisition of the sliding trace, the fingerprint image is acquired and matched. When the fingerprint image is matched, an application corresponding to the sliding trace is launched. As the fingerprint image is acquired and matched during the acquisition of the sliding trace, the time of launching an application is shortened, and the efficiency of launching an application is accordingly improved.

In at least one embodiment, the launching unit 508 is configured to perform the follows to launch the target application: determining a first target application interface of the target application according to current system time of the terminal, a geographic location of the terminal, and the fingerprint image; and loading and displaying the first target application interface to launch the target application.

In at least one embodiment, the launching unit 508 is configured to perform the follows to launch the target application: determining a second target application interface of the target application, wherein the number of times of loading and displaying the second target application interface in a first period is greater than or equal to a first threshold; and loading and displaying the second target application interface to launch the target application.

In at least one embodiment, the fingerprint processing unit 504 is configured to perform the follows to match the fingerprint image: matching the fingerprint image with N pre-stored fingerprint templates of the terminal in a descending order of priorities of the N pre-stored fingerprint templates, wherein N is an integer greater than 1; and determining that the fingerprint image is successfully matched when a matching degree between the fingerprint image and one of the N pre-stored fingerprint templates is greater than or equal to a second threshold.

In at least one embodiment, the determining unit 506 is configured to perform the follows to determine the target application: matching the sliding trace with M pre-stored sliding traces of the terminal in a descending order of the number of times of launching applications corresponding to the M pre-stored sliding traces in a second period; determining one of the M pre-stored sliding traces that matches with the sliding trace; and determining the application corresponding to the one of the M pre-stored sliding traces to be the target application.

In at least one embodiment, the launching unit 508 is further configured to load a system desktop when the fingerprint image is successfully matched and no application corresponding to the sliding trace exists.

It should be noted that the foregoing units (the trace processing unit 502, the fingerprint processing unit 504, the determining unit 506, and the launching unit 508) are configured to perform relevant steps in the method in FIG. 1 to FIG. 4.

It shall be noted that the terminal described in the device embodiment of the present disclosure is illustrated in the form of functional units. The term "unit" used herein shall be taken in the broadest possible sense. Objects for realizing the function of each unit can be an application specific integrated circuit (ASIC), a single circuit, a processor (shared, specific, or chipset) for executing one or more software or hardware procedures, a memory, a combined logic circuit, and/or other appropriate assembly for realizing the above function. Additionally, the units of the terminal 500 illustrated in FIG. 5 can be realized by a processor 601 of a terminal illustrated in FIG. 6.

An embodiment of the present disclosure further provides another terminal. As illustrated by FIG. 6, a terminal 600 includes at least one processor 602, at least one memory 604, at least one communication interface 606, and a fingerprint recognition sensor 608. The processor 602, the memory 604, the communication interface 606, and the fingerprint recognition sensor 608 are coupled and communicate with each other via a communication bus.

The processor 602 may be a central processing unit (CPU), a micro control unit (MCU), an ASIC, or one or more integrated circuits for controlling execution of the above methods.

The communication interface 606 communicates with other devices or communication networks, for example, Ethernet, wireless local area networks (WLAN), and so on.

The memory 604 may be a read-only memory (ROM), other static memory for storing static information and instructions, a random access memory (RAM), or other dynamic memory for storing dynamic information and instructions. The memory 604 can also be an electrically erasable programmable read-only memory (EEPROM), a compact disc read-only memory (CD-ROM), other disc memory (compressed disc, laser disc, digital general disc, blu-ray disc, and so on), a disc storage medium, other disc storage medium, or any medium for carrying or storing descried program codes in the form of instructions or data structure and executable by a computer. The present disclosure is not limited thereto. The memory 604 can stand alone, and communicate with the processor 602 via the bus. The memory 604 can also be integrated into the processor 602.

The program codes stored in the memory 604 may be invoked by the processor 602 to execute any of the methods for launching an application. For example, a sliding trace of a sliding operation performed on the fingerprint recognition sensor 608 is acquired. A fingerprint image is acquired and matched during the acquisition of the sliding trace. A target application corresponding to the sliding trace is determined. The target application is launched when the fingerprint image is successfully matched.

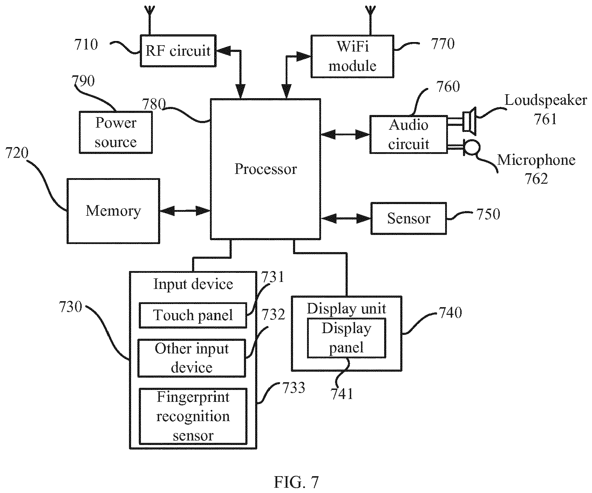

An embodiment of the present disclosure further provides another terminal. As illustrated by FIG. 7, for the sake of convenient illustration, only parts related to the embodiment of the present disclosure are illustrated, and the method embodiments of the present disclosure are referred to know technical details. The terminal may be a mobile phone, a tablet compute, a personal digital assistant (PDA), a point of sales (POS), an on-board computer, or other. A mobile phone is taken as an example to illustrate the terminal.

FIG. 7 is a structure diagram of a mobile phone in accordance with an embodiment of the present disclosure. The mobile phone may include an RF circuit 710, a memory 720, an input unit 730, a display unit 740, at least one sensor 750, an audio circuit 760, a wireless fidelity (WiFi) module 770, a processor 780, a power source 790, and the like.

The RF circuit 710 may be configured to receive and transmit signals in an information receiving and transmitting or communication process, and transmit received downlink information of a base station to the processor 780 for processing. In addition, uplink data is transmitted to the base station. Generally, the RF circuit 710 includes, but is not limited to, an antenna, at least one amplifier, a transceiver, a coupler, a low noise amplifier (LNA), a duplexer, etc. In addition, the RF circuit 710 may further communicate with other devices via wireless communication and a network. The wireless communication may use any one communication standard or protocol, including, but not limited to, a global system of mobile communication (GSM), general packet radio service (GPRS), code division multiple access (CDMA), wideband code division multiple access (WCDMA), long term evolution (LTE), an E-mail, short messaging service (SMS), etc.

The memory 720 may be configured to store software programs and modules, and the processor 780 executes various function applications and data processing of the mobile phone by running the software programs and the modules stored in the memory 720. The memory 720 may mainly include a storage program region and a storage data region. The storage program region may store an operation system, and an application program needed for at least one function (such as a function of obtaining a fingerprint image that succeeds in fingerprint matching, a function of assessing fingerprint image, a function of updating a fingerprint template, and the like). The storage data region may store data (such as history fingerprint image data that succeeds in fingerprint matching, the number of times that all fingerprint templates are successfully matched in a second time period) created according to use of the mobile phone. In addition, the memory 720 may include a high-speed RAM, and may further include a non-volatile memory such as a disk storage device, a flash device, or other non-volatile solid storage devices.

The input unit 730 may be configured to receive input digital or character information and generate key signal input associated with user setting and functional control of the mobile phone. Specifically, the input unit 730 may include a touch panel 731, other input devices 732, and a fingerprint recognition sensor 733. The fingerprint recognition sensor 733 can collect fingerprint data. The touch panel 731 is also called as a touch screen, capable of collecting touch operations of user executed thereon or nearby (for example, operations of a user executed on the touch panel 731 or nearby the touch panel 731 by using fingers or any suitable objects or accessories such as a touch pen), and driving a corresponding connecting apparatus according to a preset program. Alternatively, the touch panel 731 may include two parts, namely a touch detection apparatus and a touch controller. The touch detection apparatus detects the touch direction of the user, detects signals bought by the touch operation and transmits the signals to the touch controller. The touch controller receives touch information from the touch detection apparatus, converts the touch information into contact coordinates, transmits the contact coordinates to the processor 780, and can receive a command sent by the processor 780 to be executed. In addition, the touch panel 731 may be implemented by means of multiple types such as a resistance type, a capacitance type, infrared rays, and surface acoustic waves. The input unit 730 may further include, in addition to the touch panel 731, other input devices 732. Specifically, the other input devices 732 may include, but are not limited to, one or more of a physical keyboard, a functional key (such as a volume control key and a switch key), a track ball, a mouse, and an operating rod. The fingerprint recognition sensor 733 can be set in combination with a dome key of the terminal device, and can also be set in combination with the touch panel 731. For example, the fingerprint recognition sensor 733 is set below the touch panel 731. When a finger of a user presses an application icon, the fingerprint recognition sensor below the touch panel 731 can collect fingerprint data of the finger of the user.

The display unit 740 may be configured to display information input by the user or information provided for the user or various menus of the mobile phone. The display unit 740 may include a display panel 741, and alternatively, the display panel 741 may be configured in a form of a Liquid Crystal Display (LCD), an Organic Light-Emitting Diode (OLED), etc. Furthermore, the touch panel 731 may cover the display panel 741. When the touch panel 731 detects the touch operation thereon or nearby, the touch operation is transmitted to the processor 780 to determine the type of a touch event, and then the processor 780 provides corresponding visual output on the display panel 741. Although, the touch panel 731 and the display panel 741 implement input of the mobile phone and input functions by serving as two independent parts in FIG. 7, the touch panel 731 and the display panel 741 may be integrated to implement the input of the mobile phone and the input functions in some embodiments.

The at least one sensor 750 may include a light sensor, a motion sensor and other sensors. Specifically, the light sensor may include an ambient light sensor and a proximity sensor, the ambient light sensor may adjust the luminance of the display panel 741 according to the brightness of ambient light, and the proximity sensor may close the display panel 741 and/or backlight when the mobile phone reaches nearby the ear. As one of the motion sensors, an accelerometer sensor may detect the magnitude of an accelerated speed in each direction (generally, three-axis), the size and direction of a gravity may be detected while resting, and the accelerometer sensor may be configured to identify an application of a mobile phone gesture (e.g., horizontal and vertical screen switching, relevant games, and magnetometer gesture calibration), and vibration identification relevant functions (e.g., pedometer and knocking), etc.. Other sensors such as a gyroscope sensor, a barometer sensor, a hygrometer sensor, a thermometer sensor and an infrared sensor configurable for the mobile phone will not be elaborated herein.

The audio circuit 760, a loudspeaker 761, and a microphone 762 may provide an audio interface between the user and the mobile phone. The audio circuit 760 may transmit an electric signal converted from the received audio data to the loudspeaker 761, and the loudspeaker 761 converts the electric signal into a sound signal for output. Besides, the microphone 762 converts a collected sound signal into an electric signal, the audio circuit 760 converts the received electric signal into audio data and then outputs the audio data to the processor 780 for processing, the audio data is transmitted to another mobile phone via the RF circuit 710, or the audio data is output to the memory 720 for further processing.

WiFi belongs to a short-range wireless transmission technology, the mobile phone may assist the user in E-mail receiving and sending, webpage browsing, access to streaming media and the like by means of the WiFi module 770, and it provides a wireless wideband internet access for the user. Although FIG. 7 shows the WiFi module 770, it may be understood that the WiFi module 770 does not belong to necessary components of the mobile phone and can totally be omitted without changing the essence of the present disclosure as required.

The processor 780 is a control center of the mobile phone, and is configured to connect all parts of the whole mobile phone by utilizing various interfaces and lines, to run or execute the software program and/or the module stored in the memory 720, and to call data stored in the memory 720 to execute various functions and processing data of the mobile phone, so as to wholly monitor the mobile phone. Alternatively, the processor 780 may include one or more processing units. Preferably, the processor 780 may be integrated with an application processor and a modulation-demodulation processor, the application processor mainly processes an operation system, a user interface, an application program and the like, and the modulation-demodulation processor mainly processes wireless communication. It may be understood that the modulation-demodulation processor may not be integrated into the processor 780.

The power supply 790 (such as a battery) supplies power to each component. Preferably, the power supply may be connected with the processor 780 logically via a power supply management system, so as to implement functions of charging, discharging and power consumption management and the like by means of the power supply management system.

The mobile phone may further include a camera, a Bluetooth module and the like, which are not shown, though, will not be elaborated herein.

In the forgoing method embodiments, each process may be implemented on the basis of the structure of the mobile phone.

The embodiments of the present disclosure also provide a computer storage medium. The computer storage medium may store computer-executable program codes, and the program codes include some or all of the processes of any of the methods for launching an application in the method embodiments.

It is to be noted that, for the sake of simplicity, the foregoing method embodiments are described as a series of action combinations, however, it will be appreciated by those skilled in the art that the present disclosure is not limited by the sequence of actions described. That is because that, according to the present disclosure, certain steps may be performed in other order or simultaneously. Also, it will be appreciated by those skilled in the art that the embodiments described in the specification are exemplary embodiments and the actions and modules involved are not necessarily necessary for the present disclosure.

In the foregoing embodiments, descriptions of each embodiment are emphasized respectively, and parts which are not elaborated in a certain embodiment may subject to relevant descriptions of other embodiments.

The apparatus disclosed in embodiments provided herein may be implemented in other ways. For example, the device/apparatus embodiments described above are merely illustrative; for instance, the division of the unit is only a logical function division and there can be another way of division during actual implementations, for example, multiple units or components may be combined or may be integrated into another system, or some features may be ignored or not performed. In addition, coupling or communication connection between each displayed or discussed component may be direct coupling or communication connection, or may be indirect coupling or communication among devices or units via some interfaces, and may be electrical and mechanical or adopt other forms.

The units described as separate components may or may not be physically separate, the components shown as units may or may not be physical units, and namely they may be in the same place or may be distributed to multiple network elements. Part or all of the units may be selected per actual needs to achieve the purpose of the technical solutions of the embodiments.

In addition, the functional units in various embodiments of the present disclosure may be integrated in one processing unit, or each unit may be physically present, or two or more units may be integrated in one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory described above includes a variety of media that can store programs codes, such as a USB disk, a read-only memory (ROM), a random-access memory (RAM), a mobile hard disk, a magnetic disk, or an optical disk and so on.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), Disk or CD, and so on.

The forgoing specifically illustrates the embodiment of the present disclosure. The principles and embodiments of the present disclosure are illustrated by means of examples. The above embodiment illustrations are just used to help to understand the method and core concepts of the present disclosure. For a person skilled in the art changes may be made based on the embodiments and application ranges.

## Claims

1. A method for launching an application, comprising:
acquiring a sliding trace of a sliding operation performed on a fingerprint recognition sensor of a terminal;
acquiring a fingerprint image and matching the fingerprint image during the acquisition of the sliding trace;
determining a target application corresponding to the sliding trace; and
launching the target application corresponding to the sliding trace when the fingerprint image is successfully matched,
**characterised in that** the step of determining a target application corresponding to the sliding trace comprising:
matching the sliding trace with *M* pre-stored sliding traces of the terminal in a descending order of the number of times of starting applications corresponding to the *M* pre-stored sliding traces in a certain period;
determining one of the *M* pre-stored sliding traces that matches with the sliding trace; and
determining an application corresponding to the one of the *M* pre-stored sliding traces to be the target application.

2. A terminal comprising:
a trace processing unit, configured to acquire a sliding trace of a sliding operation performed on a fingerprint recognition sensor of a terminal;
a fingerprint processing unit, configured to acquire a fingerprint image and matching the fingerprint image during the acquisition of the sliding trace;
a determining unit, configured to determine a target application corresponding to the sliding trace; and
a launching unit, configured to launch the target application corresponding to the sliding trace when the fingerprint image is successfully matched,
**characterised in that** the determining unit is configured to:
match the sliding trace with *M* pre-stored sliding traces of the terminal in a descending order of the number of times of launching applications corresponding to the *M* pre-stored sliding traces in a certain period;
determine one of the *M* pre-stored sliding traces that matches with the sliding trace; and
determine an application corresponding to the one of the *M* pre-stored sliding traces to be the target application.

3. A terminal comprising:
a memory configured to store computer-executable program codes; and
a processor configured to execute the computer-executable program codes to perform:
acquiring a sliding trace of a sliding operation performed on a fingerprint recognition sensor of a terminal;
acquiring a fingerprint image and matching the fingerprint image during the acquisition of the sliding trace;
determining a target application corresponding to the sliding trace;
determining a target application interface of the target application; and
loading and displaying the target application interface to launch the target application corresponding to the sliding trace when the fingerprint image is successfully matched,
**characterised in that** determining a target application interface of the target application comprises:
matching the sliding trace with *M* pre-stored sliding traces of the terminal in a descending order of the number of times of starting applications corresponding to the *M* pre-stored sliding traces in a certain period;
determining one of the *M* pre-stored sliding traces that matches with the sliding trace; and
determining an application corresponding to the one of the *M* pre-stored sliding traces to be the target application.

## Patentansprüche

1. Verfahren zum Starten einer Anwendung, das Folgendes umfasst:
Erfassen einer Gleitspur eines Gleitvorgangs, der auf einem Fingerabdrucksensor eines Endgeräts durchgeführt wird;
Erhalten eines Fingerabdruckbilds und Abgleichen des Fingerabdruckbilds während des Erfassens der Gleitspur;
Bestimmen einer Zielanwendung, die der Gleitspur entspricht; und
Starten der Zielanwendung, die der Gleitspur entspricht, wenn das Fingerabdruckbild erfolgreich abgeglichen ist,
**dadurch gekennzeichnet, dass** der Schritt des Bestimmens einer Zielanwendung, die der Gleitspur entspricht, Folgendes umfasst:
Abgleichen der Gleitspur mit M vorgespeicherten Gleitspuren des Endgeräts in absteigender Reihenfolge der Anzahl der Male, dass Anwendungen, die den M vorgespeicherten Gleitspuren entsprechen, innerhalb einer bestimmten Zeitspanne gestartet wurden;
Bestimmen einer der M vorgespeicherten Gleitspuren, die mit der Gleitspur übereinstimmt; und
Bestimmen einer Anwendung, die einer der M vorgespeicherten Gleitspuren entspricht, als Zielanwendung.

2. Endgerät, das Folgendes umfasst:
eine Spurenverarbeitungseinheit, die konfiguriert ist, um eine Gleitspur eines Gleitvorgangs, der auf einem Fingerabdruckerkennungssensor eines Endgeräts durchgeführt wurde, zu erfassen;
eine Fingerabdruckverarbeitungseinheit, die konfiguriert ist, um ein Fingerabdruckbild zu erhalten und um das Fingerabdruckbild während des Erfassens der Gleitspur abzugleichen;
eine Bestimmungseinheit, die konfiguriert ist, um eine Zielanwendung zu bestimmen, die der Gleitspur entspricht; und
eine Starteinheit, die konfiguriert ist, um die Zielanwendung, die der Gleitspur entspricht, zu starten, wenn das Fingerabdruckbild erfolgreich abgeglichen wurde;
**dadurch gekennzeichnet, dass** die Bestimmungseinheit konfiguriert ist, um:
Abgleichen der Gleitspur mit M vorgespeicherten Gleitspuren des Endgeräts in absteigender Reihenfolge der Anzahl der Male, dass Anwendungen, die den M vorgespeicherten Gleitspuren entsprechen, innerhalb einer bestimmten Zeitspanne gestartet wurden;
Bestimmen einer der M vorgespeicherten Gleitspuren, die mit der Gleitspur übereinstimmen; und
Bestimmen einer Anwendung, die einer der M vorgespeicherten Gleitspuren übereinstimmt, als Zielanwendung.

3. Endgerät, das Folgendes umfasst:
einen Speicher, der konfiguriert ist, um computerausführbare Programmcodes zu speichern; und
einen Prozessor, der konfiguriert ist, um die computerausführbare Programmcodes auszuführen um Folgendes durchzuführen:
Erfassen einer Gleitspur eines Gleitvorgangs, der auf einem Fingerabdrucksensor eines Endgeräts durchgeführt wird;
Erfassen eines Fingerabdruckbilds und Abgleichen des Fingerabdruckbilds während des Erfassens der Gleitspur;
Bestimmen einer Zielanwendung, die der Gleitspur entspricht;
Bestimmen einer Zielanwendungsschnittstelle der Zielanwendung; und
Laden und Anzeigen der Zielanwendungsoberfläche, um die Zielanwendung, die der Gleitspur entspricht, zu starten, wenn das Fingerabdruckbild erfolgreich abgeglichen wurde,
**dadurch gekennzeichnet, dass** das Bestimmen einer Zielanwendungsschnittstelle der Zielanwendung Folgendes umfasst:
Abgleichen der Gleitspur mit M vorgespeicherten Gleitspuren des Endgeräts in absteigender Reihenfolge der Anzahl der Male, dass Anwendungen, die den M vorgespeicherten Gleitspuren entsprechen, innerhalb einer bestimmten Zeitspanne gestartet wurden;
Bestimmen einer der M vorgespeicherten Gleitspuren, die der Gleitspur entsprechen; und
Bestimmen einer Anwendung, die der einen der M vorgespeicherten Gleitspuren entspricht, als die Zielanwendung.

## Revendications

1. Procédé de lancement d'une application, comprenant les étapes consistant à :
acquérir une trace de glissement d'une opération de glissement effectuée sur un capteur de reconnaissance d'empreinte digitale d'un terminal ;
acquérir une image d'empreinte digitale et faire correspondre l'image d'empreinte digitale pendant l'acquisition de la trace de glissement ;
déterminer une application cible correspondant à la trace de glissement ; et
lancer l'application cible correspondant à la trace de glissement lorsque l'image d'empreinte digitale est mise en correspondance avec succès,
**caractérisé en ce que** l'étape de détermination d'une application cible correspondant à la trace de glissement comprend les étapes consistant à :
faire correspondre la trace de glissement avec *M* traces de glissement pré-stockées du terminal dans un ordre décroissant à partir du nombre de démarrage d'applications correspondant aux *M* traces de glissement pré-stockées pendant une certaine période ;
déterminer l'une des *M* traces de glissement pré-stockées correspondant à la trace de glissement ; et
déterminer une application correspondant à celle des *M* traces de glissement pré-stockées comme étant l'application cible.

2. Terminal comprenant :
une unité de traitement de trace, configurée pour acquérir une trace de glissement d'une opération de glissement effectuée sur un capteur de reconnaissance d'empreinte digitale d'un terminal ;
une unité de traitement d'empreinte digitale, configurée pour acquérir une image d'empreinte digitale et correspondant à l'image d'empreinte digitale pendant l'acquisition de la trace de glissement ;
une unité de détermination, configurée pour déterminer une application cible correspondant à la trace de glissement ; et
une unité de lancement, configurée pour lancer l'application cible correspondant à la trace de glissement lorsque l'image d'empreinte digitale est mise en correspondance avec succès,
**caractérisé en ce que** l'unité de détermination est configurée pour :
faire correspondre la trace de glissement avec M traces de glissement pré-stockées du terminal dans un ordre décroissant à partir du nombre de lancement d'applications correspondant aux *M* traces de glissement pré-stockées pendant une certaine période ;
déterminer l'une des *M* traces de glissement pré-stockées qui correspond à la trace de glissement ; et
déterminer une application correspondant à celle des *M* traces de glissement pré-stockées comme étant l'application cible.

3. Terminal comprenant :
une mémoire configurée pour stocker des codes de programme exécutables par ordinateur ; et
un processeur configuré pour exécuter les codes de programme exécutables par ordinateur pour effectuer les étapes consistant à :
acquérir une trace de glissement d'une opération de glissement effectuée sur un capteur de reconnaissance d'empreinte digitale d'un terminal ;
acquérir une image d'empreinte digitale et faire correspondre l'image d'empreinte digitale pendant l'acquisition de la trace de glissement ;
déterminer une application cible correspondant à la trace de glissement ;
déterminer une interface d'application cible de l'application cible ; et
charger et afficher l'interface d'application cible pour lancer l'application cible correspondant à la trace de glissement lorsque l'image d'empreinte digitale est mise en correspondance avec succès,
**caractérisé en ce que** la détermination d'une interface d'application cible de l'application cible comprend les étapes consistant à :
faire correspondre la trace de glissement avec *M* traces de glissement pré-stockées du terminal dans un ordre décroissant à partir du nombre de démarrage d'applications correspondant aux *M* traces de glissement pré-stockées pendant une certaine période ;
déterminer l'une des *M* traces glissantes pré-stockées qui correspond à la trace de glissement ; et
déterminer une application correspondant à celle des *M* traces de glissement pré-stockées comme étant l'application cible.
